# EUROPEAN PATENT APPLICATION

(11) **EP 4 736 993 A1**
(43) Date of publication of application: **06.05.2026**
(21) Application number: 24831628.3
(22) Date of filing: 07.06.2024
(51) Int. Cl.: B01D 63/08, B01D 53/22, B01D 69/00

(54) **SEPARATION MEMBRANE ELEMENT AND SEPARATION DEVICE**

(30) Priority: 28.06.2023 JP 2023106408
(71) Applicant: Sumitomo Chemical Company, Limited, Tokyo 103-6020 (JP)
(72) Inventor: TASAKI, Tsutomu, Osaka-shi, Osaka 554-8558 (JP)
(74) Representative: Winter, Brandl - Partnerschaft mbB
(86) International application number: PCT/JP2024/020828
(87) International publication number: WO 2025/004758

(57) **Abstract**

An object is to provide a plate-and-frame-type separation membrane element in which, even when a gas is fed, a feed-side sealing part is unlikely to peel off. The above object is achieved by a plate-and-frame-type separation membrane element which has a sealing part between a feed-side spacer member and the separation membrane and in which the amount of compressive deformation of the permeate-side spacer member, as measured by JIS K 7181, is not more than 0.40 mm, and the adhesion strength of the sealing part, as measured by JIS K 6854, is not less than 1.0 N.

## Description

### Technical Field

The present invention relates to a separation membrane element and a separation apparatus.

### Background Art

A plate-and-frame-type separation membrane element in which flat membranes are stacked one on top of another is known as a separation membrane for separating a specific fluid component from a liquid or gas raw material fluid (e.g., Patent Literatures 1 to 3). In recent years, the performance of separation membranes has improved, and it has become possible to provide thinner separation membranes. Such thin separation membranes can be used for the removal of carbon dioxide or the like contained in a gas such as an exhaust gas. In the plate-and-frame-type separation membrane element, it is possible to use thin separation membranes that are difficult to use in spiral-wound-type separation membrane elements.

### Citation List

### [Patent Literature]

[Patent Literature 1]
   Japanese Patent Application Publication Tokukai No. 2017-000965
[Patent Literature 2]
   Japanese Patent Application Publication Tokukai No. 2017-000964
[Patent Literature 3]
   U.S. Patent Application Publication No. 2019/0065091

### Summary of Invention

### Technical Problem

When a gas is fed to the plate-and-frame-type separation membrane element as disclosed in Patent Literatures 1 to 3 above, the membrane is pressed into the permeate side, and the sealing part on the feed side can peel off.

The present invention has been made in view of the above problem, and an object thereof is to provide a plate-and-frame-type separation membrane element in which, even when a gas is fed, the sealing part on the feed side is unlikely to peel off (and, more preferably, does not peel off).

### Solution to Problem

As a result of studies conducted to solve the above problem, the present inventors have found that the above problem can be solved by a separation membrane element in which the amount of compressive deformation of a permeate-side spacer member is equal to or smaller than a predetermined value and the peel strength of a feed-side sealing part is equal to or greater than a predetermined value, and have thus completed the present invention.

The present invention encompasses the following.
<1> A plate-and-frame-type separation membrane element including: a container; and a separation membrane having a region disposed in a flat-membrane form in the container, in which the separation membrane has a separation functional layer that selectively separates a specific fluid component contained in a raw material fluid, the container houses a laminate that at least has two permeate-side spacer members, and the separation membrane and a feed-side spacer member which are disposed between the two permeate-side spacer members, in which a permeate fluid, which has permeated through the separation membrane, flows through the two permeate-side spacer members, and the raw material fluid flows through the feed-side spacer member, the separation membrane element has a feed-side sealing part between the feed-side spacer member and the separation membrane, the permeate-side spacer member has an amount of compressive deformation of not more than 0.40 mm, as measured by JIS K 7181, and the sealing part has a peel strength, as measured by JIS K 6854, of not less than 1.0 N.
<2> The plate-and-frame-type separation membrane element described in <1>, in which the permeate-side spacer members have a mesh number of not less than 18, and when the permeate-side spacer members each have a multilayer structure which has not less than two layers, the not less than two layers have the same mesh number.
<3> The plate-and-frame-type separation membrane element described in <1>, in which the permeate-side spacer members have a mesh number of not less than 50.
<4> The plate-and-frame-type separation membrane element described in any one of <1> to <3>, in which the separation membrane has a thickness from 10 µm to 600 µm.
<5> The plate-and-frame-type separation membrane element described in any one of <1> to <4>, in which the raw material fluid is a gas.
<6> The plate-and-frame-type separation membrane element described in any one of <1> to <5>, in which the specific fluid component is an acid gas.
<7> A separation apparatus including: the plate-and-frame-type separation membrane element described in any one of <1> to <6>; a first feed part and a first discharge part that are in communication with the feed-side spacer member; and a second discharge part that is in communication with the permeate-side spacer members.

### Advantageous Effects of Invention

With an aspect of the present invention, it is possible to provide a plate-and-frame-type separation membrane element in which, even when a gas is fed, a sealing part on the feed side is unlikely to peel off (and, more preferably, does not peel off).

### Brief Description of Drawings

Fig. 1 is a perspective view schematically illustrating a separation membrane element in accordance with an embodiment of the present invention.
Fig. 2 is an exploded perspective view illustrating a laminate included in the separation membrane element in accordance with an embodiment of the present invention.
Fig. 3 is a cross-sectional view of the laminate included in the separation membrane element in accordance with an embodiment of the present invention.
Fig. 4 is a perspective view illustrating a production process of the separation membrane element in accordance with an embodiment of the present invention.
Fig. 5 is a perspective view illustrating a continuation of the production process illustrated in Fig. 4.
Fig. 6 is a perspective view illustrating a continuation of the production process illustrated in Fig. 5.
Fig. 7 is a schematic view illustrating a test device for a gas leakage test carried out in Examples.

### Description of Embodiments

### [1. Separation membrane element]

A separation membrane element in accordance with an embodiment of the present invention (hereinafter, also referred to as the present separation membrane element) is a plate-and-frame-type separation membrane element including: a container; and a separation membrane having a region disposed in a flat-membrane form in the container. The separation membrane element has a separation functional layer that selectively separates a specific fluid component contained in a raw material fluid. The container houses a laminate that at least has two permeate-side spacer members, and the separation membrane and a feed-side spacer member which are disposed between the two permeate-side spacer members. A permeate fluid, which has permeated through the separation membrane, flows through the two permeate-side spacer members, and the raw material fluid flows through the feed-side spacer member. The separation membrane element has a feed-side sealing part between the feed-side spacer member and the separation membrane. The permeate-side spacer member has an amount of compressive deformation, as measured by JIS K 7181, of not more than 0.40 mm, and the sealing part has a peel strength, as measured by JIS K 6854, of not less than 1.0 N.

The following description will discuss an embodiment of the present invention, with reference to drawings. The present invention, however, is not limited to the embodiment below.

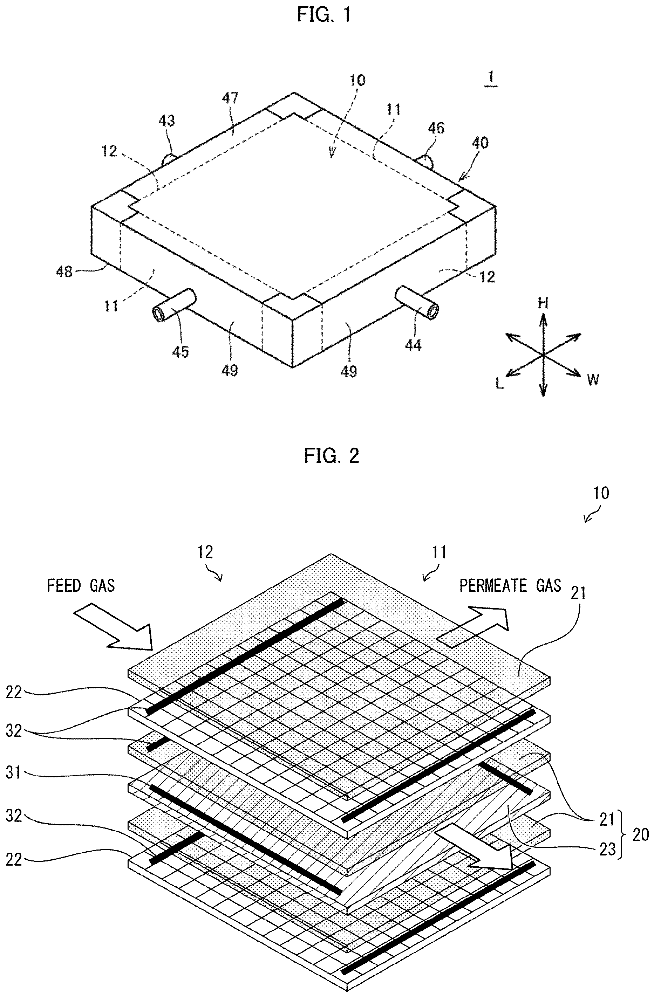

Fig. 1 is a perspective view schematically illustrating a separation membrane element in accordance with an embodiment of the present invention. Fig. 2 is an exploded perspective view illustrating a laminate included in the separation membrane element in accordance with an embodiment of the present invention. In Fig. 1, L represents a length direction of a container, W represents a width direction of the container, and H represents a height direction of the container.

A separation membrane element 1 includes: a container 40; and a separation membrane 21 (Fig. 2) having a region disposed in a flat-membrane form in the container 40. The "separation membrane having a region disposed in a flat-membrane form in the container 40" means that the separation membrane 21 is housed in the container 40 without being rolled into a roll shape or a cylindrical shape and so as to include the region disposed in a flat state. The separation membrane 21 housed in the container 40 may have a bent portion, provided that the separation membrane 21 has a region disposed in a flat-membrane form in the container 40. As described later, the separation membrane 21 may be housed in the container 40 in the state of being folded in half so that a region in a flat-membrane form is stacked. The separation membrane element 1 is a plate-and-frame-type separation membrane element.

The separation membrane 21 includes a separation functional layer that selectively separates a specific fluid component contained in a raw material fluid. The separation membrane 21 may be constituted solely by the separation functional layer, or may have a laminated structure in which the separation functional layer and a porous membrane are stacked one on top of the other. The porous membrane can be provided on one surface or both surfaces of the separation functional layer, and can support or protect the separation functional layer.

The container 40 houses a laminate 10 having: two permeate-side spacer members 22; and the separation membrane 21 and a feed-side spacer member 23 disposed between the two permeate-side spacer members 22. In Fig. 1, the height direction H of the container corresponds with the lamination direction of the laminate 10. The separation membrane 21 included in the laminate 10 is stacked so as to include a region disposed in a flat-membrane form in the container 40. Also, a permeate-side spacer member 22 and the feed-side spacer member 23 included in the laminate 10 are typically stacked so as to each include a region disposed in a flat-membrane form in the container 40.

The laminate 10 only needs to include a portion in which the permeate-side spacer member 22, the separation membrane 21, the feed-side spacer member 23, and the permeate-side spacer member 22 are stacked one on top of another in this order. For example, the laminate 10 may include a membrane laminate part 20 in which the separation membrane 21, the feed-side spacer member 23, and the separation membrane 21 are stacked one on top of another in this order, as illustrated in Fig. 2. The laminate 10 preferably has the structure in which the membrane laminate part 20 is disposed between the two permeate-side spacer members 22. The separation membrane 21 and the feed-side spacer member 23 may be adhered together via a feed-side sealing material. The permeate-side spacer member 22 and the separation membrane 21 may be adhered together via a permeate-side sealing material. As the feed-side sealing material and the permeate-side sealing material, sealing materials described later can be used.

In the laminate 10, the membrane laminate part 20 and the permeate-side spacer member 22 stacked on the membrane laminate part 20 may constitute a membrane leaf. The membrane leaf is a laminate having the layered structure in which the permeate-side spacer member 22, the separation membrane 21, the feed-side spacer member 23, and the separation membrane 21 are stacked one on top of another in this order. The laminate 10 may include a single membrane leaf, but preferably has the structure in which a plurality of membrane leaves are stacked one on top of another. When the laminate 10 has the structure in which a plurality of membrane leaves are stacked one on top of another, the members and the separation membranes may be repeatedly stacked one on top of another such that the permeate-side spacer member 22, the separation membrane 21, ... are further stacked in this order on the membrane laminate part 20, as illustrated in Fig. 2. The number of membrane leaves included in the laminate 10 is not particularly limited, but may be, for example, not less than 2 and not more than 100, not less than 5 and not more than 50, or not less than 10 and not more than 30. In the laminate 10, the uppermost and lowermost surfaces thereof are preferably each the permeate-side spacer member 22. In this case, the permeate-side spacer member 22 on the uppermost surface is a constituent of a membrane leaf.

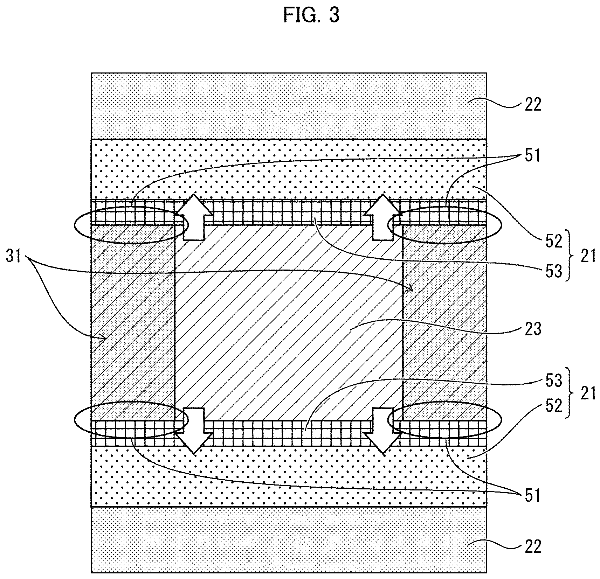

Fig. 3 is a cross-sectional view of the laminate of the present separation membrane element taken in a direction parallel to a second end part 12. The laminate 10 has a feed-side sealing part 31 between a separation functional layer 53, which is included in the separation membrane 21, and the feed-side spacer member 23 (Fig. 3). The separation functional layer 53 and a porous base material 52 form the separation membrane. In the feed-side sealing part 31, the separation functional layer 53 and the feed-side spacer member 23 are adhered together via the feed-side sealing material in an adhesion part 51. Thus, the peel strength of the feed-side sealing part 31 can also be said to be the adhesive strength of the adhesion part 51. When a raw material fluid flows through the feed part-side spacer member, pressure is generated in the direction of a separation membrane 21 (i.e., the direction along a block arrow illustrated in Fig. 3).

The feed-side sealing part 31 has the function of preventing a fluid flowing through the feed-side spacer member 23 and a fluid flowing through the permeate-side spacer member 22 from being mixed with each other. For example, the fluid flowing through the feed-side spacer member 23 refers to a raw material fluid and a non-permeate fluid, which has not permeated through the separation membrane 21. For example, the fluid flowing through the permeate-side spacer member 22 refers to a permeate fluid, which has permeated through the separation membrane 21, and a sweep fluid, which is fed to the permeate-side spacer member 22 and is discharged together with the permeate fluid. The sweep fluid is a fluid that is inactive against the separation functional layer of the separation membrane.

As necessary, the laminate can have a permeate-side sealing part 32 which is provided so as to include a position corresponding to the lamination position of the permeate-side spacer member 22 in the lamination direction of the laminate 10 (Fig. 2). The "position corresponding to the lamination position of the permeate-side spacer member 22" refers to a position occupied by the permeate-side spacer member 22, and in addition, when the permeate-side spacer member 22 is extended in a direction (the direction in which the permeate-side sealing part 32 is present in Fig. 2) along the plane of the laminate 10, a position that is occupied by the extended portion. The permeate-side sealing part 32 may be stacked so as to contain a portion of the permeate-side spacer member 22 into which the permeate-side sealing material for forming the permeate-side sealing part 32 illustrated in Fig. 2 has penetrated.

A tape for preventing permeation of the permeate-side sealing material for forming the permeate-side sealing part 32 (described later) may be provided at an end part of the feed-side spacer member 23. The tape is preferably provided at an end part of the feed-side spacer member 23 on the side facing the separation membrane 21. When the separation membrane 21 is disposed on both surfaces of the feed-side spacer member 23, the tape may be provided on both surfaces of the end part. Similarly, a tape for preventing permeation of the feed-side sealing material for forming the feed-side sealing part 31 may be provided at an end part of the permeate-side spacer member 22. When the sealing materials are double-sided tapes, it is not necessary to use a tape for prevention of the permeation.

Each layer of the laminate 10 illustrated in Fig. 2 has an end part on a surface thereof. As used herein, the end part means a region of a surface of each layer that extends a fixed distance from the outer periphery of that layer. The fixed distance is not particularly limited provided that the fixed distance does not interfere with the effect of the present separation membrane element, but may be, for example, not more than 1%, not more than 5%, or not more than 10% of the distance between the opposite edges. In one embodiment, the region serving as the end part may extend by not less than 0.5% of the distance between the opposite edges. The end part can be present not only on the surface of the laminate 10 in the upper direction (i.e., the direction in which an upper surface part 47 in Fig. 1 is present) but also on the surface in the lower direction (i.e., the direction in which a lower surface part 48 in Fig. 1 is present). The fixed distance in the end part in the upper direction and the fixed distance in the end part in the lower direction that are present in the same layer are preferably the same.

As illustrated in Fig. 2, in the laminate 10, the end part that is present in the direction where a feed gas flows is a second end part 12, and the end part that is present in the direction where a permeate gas flows is a first end part 11. Thus, a layer included in the laminate 10 has two first end parts 11 and two second end parts 12 on at least one of the surfaces thereof. As used herein, the wording "the first end parts 11 of the laminate 10" means the first end parts 11 of all the layers included in the laminate 10. The same applies to the second end part 12.

Although not illustrated in Fig. 2, the permeate-side sealing part 32 may be provided at a first end part 11 in addition to the second end parts 12 of the laminate 10. When a permeate-side sealing part 32 is provided at the first end part 11, the permeate-side sealing part 32 is preferably provided along the entire edge that forms a first end part 11 in a plan view of the laminate 10. Thus, the permeate-side sealing part 32 provided in the first end part 11 is preferably provided along the first end part 11 of the laminate 10. The second permeate-side sealing part 32 provided at the first end part 11 is also provided at a position corresponding to the lamination position of the permeate-side spacer member 22 in the lamination direction of the laminate 10, and may be stacked so as to contain a portion of the permeate-side spacer member 22 into which the sealing material has penetrated. When the permeate-side sealing part 32 is also provided at the first end part 11, the permeate-side sealing part 32 may be provided at the two second end parts 12 and at one of the first end parts 11 illustrated in Fig. 2 that is present on the edge in the direction opposite to the direction in which the permeate gas is discharged, and thereby be formed in a state (e.g., a U-shaped state) in which the permeate-side sealing parts 32 at the second end parts 12 and the first end part 11 are connected together in a plan view.

The feed-side sealing part 31 and the permeate-side sealing part 32 are preferably adhered to each other at a position (which can hereinafter be referred to as "intersection position") at which the sealing parts intersect in a plan view. In the laminate 10 illustrated in Figs. 1 and 2, the intersection position can be provided at a corner part of the laminate 10 in a plan view.

As illustrated in Fig. 1, the container 40 can have a first feed port 43 that is in communication with the feed-side spacer member 23 of the laminate 10 and that is for feeding the raw material fluid, a first discharge port 44 that is in communication with the feed-side spacer member 23 of the laminate 10 and that is for discharging the non-permeate fluid, and a second discharge port 46 that is in communication with the permeate-side spacer members 22 of the laminate 10 and that is for discharging the permeate fluid. The container 40 may further have a feed and discharge port 45 that is in communication with the permeate-side spacer members 22 of the laminate 10. The feed and discharge port 45 can be used as a second feed port for feeding the sweep fluid or as a third discharge port for discharging the permeate fluid.

In the separation membrane element 1, the laminate 10 is disposed such that the second end parts 12 of the laminate 10 face side wall parts 49 in which the first feed port 43 and the first discharge port 44 of the container 40 are stacked, and the laminate 10 is disposed such that the first end parts 11 of the laminate 10 face the side wall part 49 in which the second discharge port 46 of the container 40 is stacked (Fig. 1). When the feed and discharge port 45 of the container 40 is not used or when the container 40 does not have the feed and discharge port 45, the permeate-side sealing part 32 is formed in the first end parts 11 of the laminate 10 that are on the side where the feed and discharge port 45 in Fig. 1 is illustrated. When the container 40 has the feed and discharge port 45 and the feed and discharge port 45 is used, it is possible to feed the sweep fluid to the permeate-side spacer member 22 or discharge the permeate fluid through the feed and discharge port 45, by not forming the permeate-side sealing part 32 at the first end parts 11 of the laminate 10.

In the separation membrane element 1 having the above-described structure, the separation of a specific fluid component can be carried out as follows. First, a raw material fluid is fed into the feed-side spacer member 23 by feeding the raw material fluid to the second end parts 12 side of the laminate 10 through the first feed port 43 of the container 40. The separation functional layer of the separation membrane 21 is capable of selectively allowing the specific fluid component contained in the raw material fluid flowing through the feed-side spacer member 23 to permeate therethrough. As a result, the amount of the specific fluid component contained in the permeate fluid that has permeated through the separation membrane 21 is greater than that in the raw material fluid. Since the feed-side sealing part 31 is provided in the separation membrane element 1, the raw material fluid fed to the feed-side spacer member 23 and the non-permeate fluid, which has not permeated through the separation membrane 21, are prevented from being mixed with the permeate fluid, which flows through the permeate-side spacer member 22. Further, since the permeate-side sealing part 32 is provided in the separation membrane element 1, the permeate fluid, which has permeated through the separation membrane 21 and flows through the permeate-side spacer member 22, is prevented from being mixed with the raw material fluid and the non-permeate fluid, which flow through the feed-side spacer member 23. The non-permeate fluid, which has not permeated through the separation membrane 21, flows through the feed-side spacer member 23, and is discharged to the outside of the separation membrane element 1 through the first discharge port 44 from the second end parts 12 of the laminate 10 on the first discharge port 44 side of the container 40. The permeate fluid, which has permeated through the separation membrane 21, flows through the permeate-side spacer member 22, and is discharged to the outside of the separation membrane element 1 through the second discharge port 46 from the first end parts 11 of the laminate 10 on the second discharge port 46 side of the container 40. The permeate fluid flowing through the permeate-side spacer member 22 may be discharged to the outside of the separation membrane element 1 not only through the second discharge port 46 but also through the feed and discharge port from the first end parts 11 of the laminate 10 on the feed and discharge port 45 side of the container 40. This enables the raw material fluid to be separated into a permeate fluid and a non-permeate fluid.

When the sweep fluid is fed to the separation membrane element 1, the sweep fluid is fed to the first end parts 11 of the laminate 10 through the feed and discharge port 45 of the container 40, so that the sweep fluid is fed to the permeate-side spacer member 22. The sweep fluid flows through the permeate-side spacer member 22, and is discharged to the outside of the separation membrane element 1 through the second discharge port 46 from the first end parts 11 of the laminate 10 on the second discharge port 46 side of the container 40.

When the raw material fluid is fed to the separation membrane element 1, an internal pressure is generated in a feed-side space (i.e., the direction along the block arrow in Fig. 3) formed by the feed-side spacer member 23 through which the raw material fluid flows. Conventionally, plate-and-frame-type separation membrane elements have mainly been used for liquid permeation, and therefore, a problem caused by the internal pressure has not been recognized. For example, the above-described Patent Literatures 1 and 2 disclose plate-and-frame-type separation membrane elements; however, the plate-and-frame-type separation membrane elements are primarily intended for use in the permeation of liquids such as wastewater and seawater. Patent Literature 3 discloses the permeation of a gas through a plate-and-frame-type separation membrane element; however, Patent Literature 3 does not provide any study regarding a permeate-side spacer member or a sealing part, and only discloses a low-cost plate-and-frame-type separation membrane element.

When a plate-and-frame-type separation membrane element is used for gas permeation at normal pressure, the sealing part and the separation membrane are prone to peel from each other under the influence of the internal pressure. When peeling occurs between the sealing part and the separation membrane, the gas tightness of the sealing part deteriorates. This makes it difficult to carry out favorable fluid separation. When the plate-and-frame-type separation membrane element is subjected to gas permeation, the sealing part on the feed side peels off, and the gas tightness of the separation membrane element deteriorates. This is a novel problem discovered by the present inventors. With the present separation membrane element having the above configuration, even when a gas is fed, it is possible to achieve gas permeation without causing the feed-side sealing part to peel off.

In accordance with the configuration above, it is possible to remove CO₂ and the like from a noxious gas such as exhaust gas. Such an effect will contribute to the achievement of, for example, the Sustainable Development Goals (SDGs) proposed by the United Nations such as Goal 7 "affordable and clean energy", Goal 12 "Ensure sustainable consumption and production patterns", and Goal 13 "Take urgent action to combat climate change and its impacts".

In the above-described case in which the feed-side sealing part 31 and the permeate-side sealing part 32 are adhered to each other at the intersection position between the first end part 11 and the second end part 12 (i.e., each of the four corners of the laminate 10), it is possible to improve the adhesion of the feed-side sealing part 31 at the intersection position. This makes it much easier to improve the gas tightness of the feed-side sealing part 31.

The feed-side sealing part 31 and the permeate-side sealing part 32 can be formed with use of a sealing material. The sealing material used for the feed-side sealing part 31 and the sealing material used for the permeate-side sealing part 32 may each independently be an adhesive or a double-sided tape. When an adhesive is used, these sealing parts may be adhesive layers obtained by drying or curing the adhesive.

The feed-side sealing part 31 can be formed, for example, by applying the sealing material so as to fill a space that is stacked outside the first end parts 11 of the membrane laminate part 20 and between the two permeate-side spacer members 22, which are disposed on both sides of the membrane laminate part 20, and drying or curing the sealing material. In applying the sealing material, the sealing material may be applied to the first end parts 11 of the membrane laminate part 20 so as to penetrate into portions of the separation membrane 21 or the porous membrane of the separation membrane 21 and the feed-side spacer member 23 that correspond to the first end parts 11 of the membrane laminate part 20, and in this state, the sealing material is dried and cured. The feed-side sealing part 31 may be thereby formed.

The feed-side sealing part 31 has a peel strength, as measured by JIS K 6854, of not less than 1.0 N, preferably not less than 1.1 N, and more preferably not less than 1.2 N. The upper limit of the peel strength is not particularly limited, but may be, for example, not more than 4.0 N. The peel strength being not less than 1.0 N does not cause peeling of the feed-side sealing part 31, even when a gas permeates through the separation membrane element. The peel strength of the feed-side sealing part 31 is measured by the method described in Examples, which will be described later.

As the sealing material, a double-sided tape, an adhesive, or the like can be used. A resin contained in the adhesive is not particularly limited provided that said peel strength of the resin is not less than 1.0 N, but examples thereof include: an epoxy-based resin, an urethane-based resin, a silicone-based resin, a vinyl chloride copolymer-based resin, a vinyl chloride-vinyl acetate copolymer-based resin, a vinyl chloride-vinylidene chloride copolymer-based resin, a vinyl chloride-acrylonitrile copolymer-based resin, a butadiene-acrylonitrile copolymer-based resin, a polyamide-based resin, a polyvinyl butyral-based resin, a polyester-based resin, a cellulose derivative (nitrocellulose or the like)-based resin, a styrene-butadiene copolymer-based resin, various synthetic rubber-based (elastomer-based) resins, a phenol-based resin, a urea-based resin, a melamine-based resin, a phenoxy-based resin, and a urea-formamide-based resin. Among these resins, the sealing material is preferably an epoxy-based resin (a resin for an epoxy-based adhesive) adhesive, and more preferably an epoxy-based adhesive of a two-liquid-mixture type. In a case of a double-sided tape, a structural bonding tape which has a pressure-sensitive acrylic adhesive applied to acrylic foam can be used. When a double-sided tape is used, the double-sided tape is attached to the separation membrane, and the peel paper of the double-sided tape is peeled off, so that another separation membrane can be further bonded.

The feed-side sealing part 31 and the permeate-side sealing part 32 may be made of the same sealing material, or may be made of different sealing materials. For example, the sealing material of the feed-side sealing part 31 and the sealing material of the permeate-side sealing part 32 may be a double-sided tape and an adhesive, respectively. Alternatively, the sealing material of the feed-side sealing part 31 and the sealing material of the permeate-side sealing part 32 may be an adhesive and a double-sided tape, respectively. Also, both the sealing material of the feed-side sealing part 31 and the sealing material of the permeate-side sealing part 32 may be double-sided tapes, or may be adhesives.

In the laminate 10 illustrated in Figs. 1 and 2, the second end parts 12 of the two permeate-side spacer members 22 disposed on both sides (the outer sides in the vertical direction in Figs. 1 and 2) of the membrane laminate part 20 lie outside the second end parts 12 of the membrane laminate part 20. However, the laminate in accordance with an embodiment of the present invention is not limited to this. It is only necessary that, in a plan view of the laminate 10, the first end parts 11 of the two permeate-side spacer members 22 lie outside the first end parts 11 of the separation functional layer. For example, in a plan view of the laminate 10, the first end parts 11 of the two permeate-side spacer members 22 lie outside the first end parts 11 of the separation membrane 21 (the separation functional layer and the porous membrane), and may be located at the same positions as the end parts of the feed-side spacer member 23, which is disposed between the two permeate-side spacer members 22. Alternatively, in a plan view of the laminate 10, the first end parts 11 of the two permeate-side spacer members 22 lie outside the first end parts 11 of the feed-side spacer member 23, which is disposed between the two permeate-side spacer members 22, and may be at the same positions as the first end parts 11 of the porous membrane, which is included in the separation membrane 21. In a plan view of the laminate 10, when the first end parts 11 of the two permeate-side spacer members 22 are located at the same positions as the first end parts 11 of the porous membrane included in the separation membrane 21 and/or the feed-side spacer member 23, the feed-side sealing part 31 may contain part of the separation membrane 21 and/or part of the feed-side spacer member 23 (e.g., the first end parts 11).

The separation membrane element 1 is capable of separating a specific fluid component from the raw material fluid which contains at least the specific fluid component. The raw material fluid, the specific fluid component, the permeate fluid, the non-permeate fluid, and the sweep fluid may each independently be a gas or a liquid. The separation membrane element 1 is preferably a gas separation membrane element, and preferably selectively allows a specific gas component from a raw material gas to permeate therethrough.

The specific fluid component is preferably an acid gas. Examples of the acid gas include carbon dioxide (CO₂), hydrogen sulfide (H₂S), sulfur oxides (SOₓ), and nitrogen oxides (NOₓ). The specific gas component is preferably carbon dioxide or hydrogen sulfide, and more preferably carbon dioxide. Examples of the raw material gas include an acid gas-containing gas, such as a residual exhaust gas of syngas synthesized in a plant producing hydrogen, urea, or the like, natural gas, biogas, or combustion exhaust gas discharged from a power plant, a waste treatment plant, a cement plant, or the like.

In a gas leakage test, when the pressure on the feed side is 200 kPG, the present separation membrane element preferably has a performance of not more than 40 GPU (1 GPU = 3.35 x 10⁻¹⁰ mol·m⁻² s⁻¹·Pa⁻¹). It can be said that, when the present separation membrane element achieves the above performance, the separation membrane element sufficiently withstands practical use. The upper limit of the GPU is not particularly limited, but may be, for example, not more than 100 GPU at 200 kPG. The gas leakage test is the test described in Examples (described later).

### (Method for producing separation membrane element)

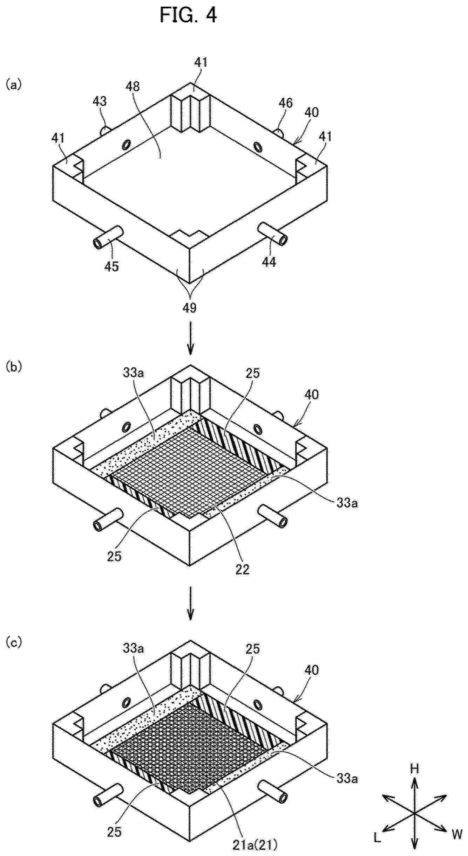

Figs. 4 to 6 are perspective views illustrating a production process of the separation membrane element in accordance with an embodiment of the present invention. In Figs. 4 to 6, L represents the length direction of a container, W represents the width direction of the container, and H represents the height direction of the container.

The separation membrane element 1 can be produced by using the container 40, the separation membrane 21, the permeate-side spacer member 22, and the feed-side spacer member 23 to dispose, in the housing space of the container 40, the permeate-side spacer member 22, the separation membrane 21, and the feed-side spacer member 23 one on top of another to form the laminate 10. Here is the description of an example of the method for producing the separation membrane element 1 that houses, in the prismatic container 40, the rectangular laminate 10 that is rectangular in a plan view.

First, the container 40 is prepared. The container 40 illustrated in (a) of Fig. 4 has a housing space for housing the members that constitute the laminate 10, and the top face thereof is open. The container 40 can include guide parts 41 for positioning the members housed in the housing space. When the housing space of the container 40 is prismatic, the guide parts 41 are preferably provided at the corners of the container 40 ((a) of Fig. 4).

A first tape 25 for preventing penetration of the sealing material is attached to both surfaces of the permeate-side spacer member 22 in the first end parts 11 of the laminate 10. In the permeate-side spacer member 22 illustrated in Fig. 4, the first tape 25 is attached to the first end parts 11 extending along the two opposite edges ((b) of Fig. 4). The permeate-side spacer member 22 to which the first tape 25 is attached is disposed in the container 40 such that the edges at which the first tape 25 is placed are parallel to the edges that extend parallel to the width direction W. Then, a sealing material 33a is applied along the second end parts 12 (end parts of the permeate-side spacer member 22 in which the first tape 25 has not been placed (end parts extending parallel to the length direction L)) of the laminate 10 ((b) of Fig. 4). The sealing material 33a may be applied to portions outside the second end parts 12 of the permeate-side spacer member 22 in a plan view of the container 40, or may be applied so as to cover said end parts.

Subsequently, the separation membrane 21 (which can hereinafter be referred to as "first separation membrane 21a") is stacked on the permeate-side spacer member 22 ((c) of Fig. 4). In so doing, the first separation membrane 21a is stacked such that, in the first end parts 11 (the end parts extending parallel to the width direction W) of the laminate 10, the end parts of the permeate-side spacer member 22 lie outside the end parts of the first separation membrane 21a in a plan view of the laminate 10 ((c) of Fig. 4). For example, the first separation membrane 21a is stacked so as not to cover the first tapes 25 on the permeate-side spacer member 22. In a plan view of the laminate 10, in the second end parts 12 (the end parts extending parallel to the length direction L) of the laminate 10, the end parts of the permeate-side spacer member 22 may lie outside the end parts of the first separation membrane 21a, or may be located at the same positions as the end parts of the first separation membrane 21a.

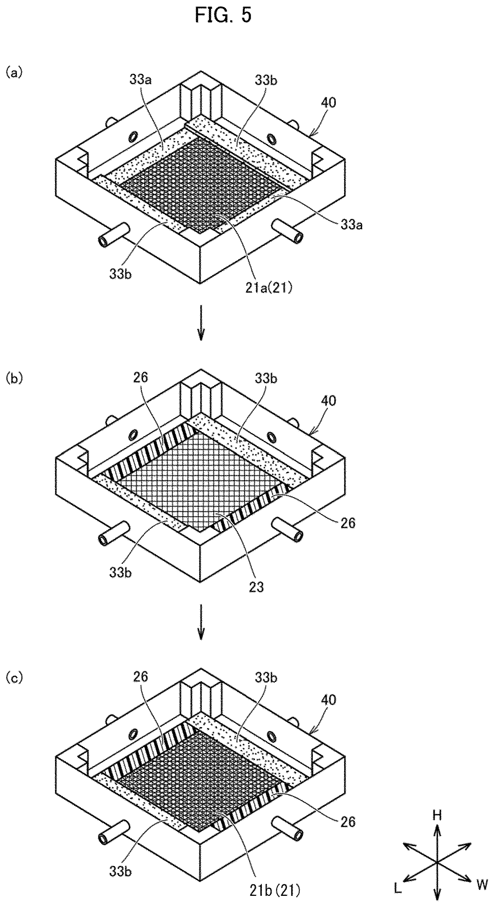

Then, a sealing material 33b (corresponding to the feed-side sealing part 31) is applied to the first end parts 11 of the laminate 10 ((a) of Fig. 5). For example, in a plan view of the laminate 10, the sealing material 33b is applied so as to cover the entire end parts of the permeate-side spacer member 22, which lie outside the end parts of the first separation membrane 21a. Illustrated in (a) of Fig. 5 is a case in which the sealing material 33b is applied to the first tapes 25 on the permeate-side spacer member 22. The sealing material 33b is applied such that both ends (both ends in the width direction W) of the applied sealing material 33b coincide with both ends (both ends in the length direction L) of the applied sealing material 33a.

Next, a second tape 26 for preventing penetration of the sealing material is attached to both surfaces of the feed-side spacer member 23 in the second end parts 12 of the laminate 10. The feed-side spacer member 23 to which the second tape 26 is attached is stacked on the first separation membrane 21a in the container 40 ((b) of Fig. 5). The feed-side spacer member 23 is stacked on the first separation membrane 21a such that the edges at which the second tape 26 is placed are parallel to the edges that extend parallel to the length direction L. In so doing, the feed-side spacer member 23 is stacked such that, in the first end parts 11 (the end parts extending parallel to the width direction W) of the laminate 10, the first end parts 11 of the permeate-side spacer member 22 lie outside the first end parts 11 of the feed-side spacer member 23 in a plan view of the laminate 10 ((b) of Fig. 5). In (b) of Fig. 5, the feed-side spacer member 23 is stacked so as not to overlap with the applied sealing material 33b on the permeate-side spacer member 22.

Then, the separation membrane 21 (which can hereinafter be referred to as "second separation membrane 21b") is further stacked on the feed-side spacer member 23 in the container 40. In so doing, the second separation membrane 21b is stacked such that, in the first end parts 11 (the end parts extending parallel to the width direction W) of the laminate 10, the first end parts 11 of the permeate-side spacer member 22 lie outside the first end parts 11 of the second separation membrane 21b in a plan view of the laminate 10 ((c) of Fig. 5). In a plan view of the laminate 10, in the second end parts 12 (the end parts extending parallel to the length direction L) of the laminate 10, the second end parts 12 of the permeate-side spacer member 22 may lie outside the second end parts 12 of the second separation membrane 21b, or may be located at the same positions as the second end parts 12 of the second separation membrane 21b. Subsequently, the sealing material is applied to the second end parts 12 of the laminate 10. The sealing material is preferably applied to a portion that coincides with the previously applied sealing material 33a with the feed-side spacer member 23 interposed therebetween. In this manner, the first separation membrane 21a, the feed-side spacer member 23, and the second separation membrane 21b stacked one on top of another on the permeate-side spacer member 22 constitute the membrane laminate part 20.

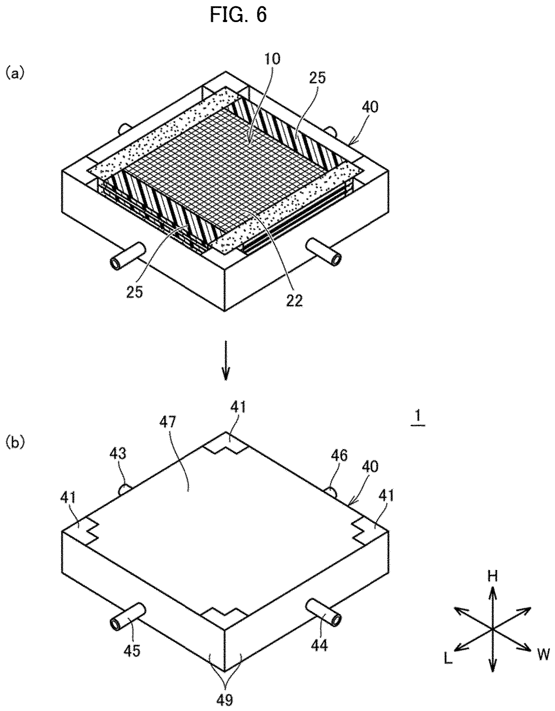

Next, the permeate-side spacer member 22 is further stacked on the second separation membrane 21b in the container 40. This permeate-side spacer member 22 is stacked on the second separation membrane 21b such that, in the first end parts 11 (the end parts extending parallel to the width direction W) of the laminate 10, the first end parts 11 of the permeate-side spacer member 22 lie outside the first end parts 11 of the membrane laminate part 20 in a plan view of the laminate 10. The membrane laminate part 20 (the first separation membrane 21a, the feed-side spacer member 23, and the second separation membrane 21b) and the permeate-side spacer member 22 stacked on the membrane laminate part 20 constitute a membrane leaf. In the procedure described above, the laminate 10 is formed in the container 40 by repeating the process of forming a membrane leaf on another membrane leaf ((a) of Fig. 6).

After the laminate 10 is formed in the container 40, a gap between the guide parts 41 and the laminate 10 in the container 40 is sealed with a sealing material. Subsequently, the sealing material is applied onto the second end parts 12 of the permeate-side spacer member 22 included in the membrane leaf on the uppermost surface of the laminate 10, an upper lid that serves as the upper surface part 47 of the container 40 is placed ((b) of Fig. 6), and a sealing material is applied to a gap between the upper lid and the side wall parts 49 of the container 40. Then, by drying or curing the sealing material, the separation membrane element 1 can be obtained ((b) of Fig. 6).

In the production method described above, two separation membranes (the first separation membrane 21a and the second separation membrane 21b) are used in order to form the membrane laminate part 20. Alternatively, the membrane laminate part 20 may be formed by folding a single separation membrane in half and sandwiching the feed-side spacer member 23 between the separation membrane halves. When the separation membrane folded in half is used, the folded portion may be disposed in the first end parts 11 of the laminate 10. In the separation membrane element 1 illustrated in (b) of Fig. 6, the folded portion is preferably disposed so as to be in communication with the second discharge port 46 of the container 40 for discharging the permeate fluid. In this case, it is not necessary to provide a feed-side sealing part at the first end part 11 where the folded part of the separation membrane is disposed.

### [2. Separation apparatus]

The separation apparatus can have at least one present separation membrane element. The arrangement and number of separation membrane elements to be included in the separation apparatus can be selected according to a required throughput, the recovery ratio of a specific fluid component, the size of a location in which the separation apparatus is placed, and the like.

The separation apparatus can include a first feed part and a first discharge part each of which communicates with the feed-side spacer member 23 of the separation membrane element 1 and a second discharge part which communicates with the permeate-side spacer members 22 of the separation membrane element 1. The separation apparatus may further include a feed and discharge part which communicates with the permeate-side spacer members 22 of the separation membrane element 1.

The first feed part is an inlet for feeding a raw material fluid to the feed-side spacer member, and can communicate with the first feed port 43 of the separation membrane element 1. The first discharge part is an outlet for discharging the non-permeate fluid flowing through the feed-side spacer member, and can communicate with the first discharge port 44 of the separation membrane element 1. The second discharge part is an outlet for discharging the permeate fluid flowing through the permeate-side spacer member, and can communicate with the second discharge port 46 of the separation membrane element 1. The feed and discharge part can be used as a second feed part, which is an inlet for feeding the sweep fluid to the permeate-side spacer members, or as a third discharge part for discharging the permeate fluid. The feed and discharge part can communicate with the feed and discharge port 45 of the separation membrane element 1.

The members of the separation membrane element 1 and the separation apparatus are described here in further detail.

### (Container)

The container 40 houses the laminate 10. As illustrated in Fig. 1, the container 40 has an upper surface part 47, a lower surface part 48, and side wall parts 49 that connect the upper surface part 47 and the lower surface part 48, and a housing space can be defined by the upper surface part 47, the lower surface part 48, and the side wall parts 49. The upper surface part 47 and the lower surface part 48 extend in a direction orthogonal to the lamination direction of the laminate 10, and the side wall parts 49 extend in the lamination direction of the laminate. The shape of the container is not particularly limited, and the upper surface part 47 and the lower surface part 48 may be polygonal, for example, rectangular, or may be circular. The side wall parts 49 may be prismatic, or may be cylindrical.

The container 40 may include the guide parts 41 for positioning the members of the laminate 10, as illustrated in (a) of Fig. 5. When the side wall parts 49 of the container 40 are prismatic, the guide parts 41 are preferably provided at the corners of the side wall parts 49.

The first feed port 43, the feed and discharge port 45, the first discharge port 44, and the second discharge port 46 of the container 40 may be provided in the side wall parts 49 of the container 40, or may be provided in the upper surface part 47 or the lower surface part 48.

Each member of the container 40 can be made of a resin, glass, a metal, a ceramic, or the like. Examples of the resin include: resins such as polycarbonates, acrylic resins, fluororesins, polybutylene succinate (PBS), polyethylene terephthalate (PET), polyvinyl chloride (PVC), polystyrene (PS), acrylonitrile butadiene styrene copolymers (ABS), polyphenylene sulfide (PPS), polyether sulfones (PES), polysulfones (PSF), polyacrylonitrile (PAN), polyphenylene oxide (PPO), polyamides (PA), polyimides (PI), polyetherimide (PEI), polyether ether ketone (PEEK), and polypropylene (PP); and fiber-reinforced resins obtained by mixing any of these resins with a fiber such as glass. Examples of the metal include stainless steel such as SUS, aluminum, and copper. The members of the container 40 may be made of the same material, or may be made of different materials.

### (Separation membrane)

The separation membrane 21 is not particularly limited, provided that the separation membrane 21 is a known separation membrane capable of selectively allowing a specific fluid component from the raw material fluid to permeate therethrough. For example, the separation membrane 21 can be an ultrafilter, a nanofilter, a reverse osmosis membrane, a dialysis membrane, a forward osmosis membrane, a dissolution-diffusion membrane, a facilitated transport membrane, or the like. The dissolution-diffusion membrane is a membrane that utilizes differences in solubility and diffusivity of fluid molecules to selectively allow the permeation of the molecules. The facilitated transport membrane is a membrane containing a substance that promotes the solubility and/or diffusivity of a fluid molecule. The separation membrane 21 is preferably a dissolution-diffusion membrane.

The separation membrane 21 can have a porous membrane and a separation functional layer. The number of layers of the porous membrane included in the separation membrane 21 only needs to be one or more, and can be two or more, or three or more. The porous membrane can be provided on one surface or both surfaces of the separation functional layer. The number of layers of the porous membrane provided on one surface or both surfaces of the separation functional layer may be one or more. The separation membrane 21 may also have a support layer for reinforcement as necessary.

When the separation membrane has the porous membrane on only one of the surfaces thereof, the membrane laminate part 20 preferably has the separation membranes 21 and the feed-side spacer member 23 stacked one on top of another such that the separation functional layers of the separation membranes 21 face the feed-side spacer member 23.

The thickness of the separation membrane is preferably 10 µm to 600 µm, more preferably 10 µm to 550 µm, and even more preferably 10 µm to 510 µm. When the thickness of the separation membrane is in the above range, the membrane is thin, thereby making it possible to sufficiently separate a specific fluid component such as carbon dioxide from the raw material fluid. When the thickness of the separation membrane is in the above range, it is difficult to use the separation membrane in spiral-wound-type separation membrane elements; however, it is possible to use the separation membrane in plate-and-frame-type separation membrane elements.

### (Separation functional layer)

The separation functional layer can be selected according to the type of the above-described membrane. The separation functional layer is preferably a layer formed using a composition containing a resin. Examples of the resin include polyacrylic acid, polyamides, cellulose acetate, polysulfones, polyether sulfones, vinylidene fluoride, polyacrylonitrile, polyvinyl chloride-polyacrylonitrile copolymers, epoxy resins, polyimides, polyvinyl alcohol, polysiloxanes, polyether block amide copolymers, and polyethylene oxide. The polyacrylic acid may be crosslinked polyacrylic acid, which has been subjected to crosslinking, or may be non-crosslinked polyacrylic acid, which has not been subjected to crosslinking.

The separation functional layer may be a gel layer. The gel layer contains a hydrophilic resin such as polyacrylic acid, and may further contain an amino acid, aminosulfonic acid, and/or aminophosphonic acid. The gel layer may contain a surfactant for adjusting wettability with respect to the porous membrane. When the specific fluid component is a gas, the gel layer may further contain an alkali metal compound and/or a hydration reaction catalyst for improving the speed of a reaction between the specific gas component and an alkali metal compound.

The separation functional layer can be produced, for example, by applying, onto the porous membrane, a coating solution containing the above resin and a medium. Examples of a method for applying the coating solution onto the porous membrane include slot die coating, a spin coating method, bar coating, a die coating method, blade coating, air-knife coating, a gravure coating method, roll coating, spray coating, dip coating, a comma roller method, a kiss coating method, screen printing, and inkjet printing.

The separation functional layer has a thickness of 1 nm to 1000 nm, and is more preferably 10 nm to 500 nm, and even more preferably 100 nm to 400 nm. When the separation functional layer has a thickness in the above range, it is possible to sufficiently separate a specific fluid component such as carbon dioxide from a raw material fluid.

### (Porous membrane)

The porous membrane can be a support layer for supporting the separation functional layer, or a protective layer for protecting the separation functional layer. The porous membrane can be in direct contact with the separation functional layer. The porous membrane preferably has porosity with a high fluid permeability, so as not to cause resistance to the diffusion of a raw material fluid fed to the separation functional layer or a specific fluid component contained in the raw material fluid.

The porous membrane is preferably formed of a resin material or an inorganic material. Examples of the resin material of the porous membrane include: polyolefin-based resins such as polyethylene (PE) and polypropylene (PP); fluorine-containing resins such as polytetrafluoroethylene (PTFE), polyvinyl fluoride (PVF), and polyvinylidene fluoride (PVDF); polyester resins such as polyethylene terephthalate (PET) and polyethylene naphthalate; polystyrene (PS); polyether sulfones (PES); polyphenylene sulfide (PPS); polysulfones (PSF); polyacrylonitrile (PAN); polyphenylene oxide (PPO); polyamides (PA); polyimides (PI); polyetherimide (PEI); polyether ether ketone (PEEK); high molecular weight polyesters; heat resistant polyamides; aramids; polycarbonates; and a mixture of two or more of these resin materials. In particular, from the perspective of water repellency and heat resistance, the porous membrane preferably contains at least one selected from the group consisting of polyolefin-based resins and fluorine-containing resins, and more preferably contains one or more selected from the group consisting of polyethylene, polypropylene, and polytetrafluoroethylene. Examples of the inorganic material of the porous membrane include metals, glass, and ceramics.

The porous membrane is not particularly limited, provided that it is a porous body. The porous membrane can be a sheet-shaped porous body such as a porous resin film, a nonwoven fabric, a woven fabric, a foamed product, a mesh, or a net. These porous bodies can also be used as a support layer for reinforcement.

The porous membrane included in the separation membrane can be, for example, one or more layers of a porous resin film stacked on one side of the separation functional layer and one or more layers of a nonwoven fabric stacked on the other side of the separation functional layer.

### (Feed-side spacer member and permeate-side spacer member)

The feed-side spacer member 23 and the permeate-side spacer member 22 preferably have the function of facilitating turbulence (membrane surface renewal) of a raw material fluid and a permeate fluid that has permeated through the separation membrane 21 to increase the membrane permeation speed of the permeate fluid in the raw material fluid, and the function of minimizing pressure loss of the fed raw material fluid and the permeate fluid that has permeated through the separation membrane 21. The feed-side spacer member 23 and the permeate-side spacer members 22 preferably have a function as a spacer for forming a channel for a raw material fluid and a permeate fluid and the function of causing turbulence in the raw material fluid and the permeate fluid. Thus, the feed-side spacer member 23 and the permeate-side spacer members 22 that are in the form of a network (a net, a mesh, or the like) are suitably used. Since the channel of a fluid changes depending on the form of the network, the shape of a unit lattice of the network is preferably selected from the group consisting of, for example, a square, a rectangle, a rhombus, and a parallelogram, depending on the purpose.

The permeate-side spacer member has the amount of compressive deformation, as measured by JIS K 7181, of not more than 0.40 mm, and preferably not more than 0.35 mm, and more preferably not more than 0.30 mm. The lower limit of the amount of compressive deformation is not particularly limited, but may be, for example, not less than 0.10 mm. When the amount of compressive deformation is not more than 0.40 mm, it is unlikely to cause peeling of the feed-side sealing part 31, even when the gas permeates through the present separation membrane element. The amount of compressive deformation of the permeate-side spacer members is measured by the method described in Examples (described later).

The material of the feed-side spacer member 23 and the permeate-side spacer member 22 is not particularly limited, but is preferably a heat resistant material that can withstand the operating temperature condition of a separation apparatus in which the separation membrane element 1 is provided. The feed-side spacer member 23 and the permeate-side spacer member 22 may each independently have a single-layer structure or a multilayer structure. The feed-side spacer member 23 and the permeate-side spacer member 22 both having a multilayer structure preferably have a structure in which one or more types of layers in the form of a network are stacked one on top of another, and the layers in the form of a network that are stacked one on top of another may have mutually different network structures. The permeate-side spacer member 22 preferably has a single-layer structure.

As used herein, the phrase "the permeate-side spacer member 22 has a single-layer structure" means that the permeate-side spacer member 22 does not have a plurality of layers. The phrase therefore means that the permeate-side spacer member 22 consists of a single sheet of mesh, net, or the like, and is not intended to mean that the permeate-side spacer member 22, the separation membrane 21, and the feed-side spacer member 23 are not stacked one on top of another in the separation membrane element 1. The phrase "the permeate-side spacer member 22 has a multilayer structure" means that the permeate-side spacer member 22 is composed of multiple sheets of mesh or net.

In an embodiment of the present invention, the permeate-side spacer member is preferably in the form of a mesh. When the permeate-side spacer member is in a mesh form, and has a multilayer structure having two or more layers, the mesh numbers of the layers of the permeate-side spacer member are preferably the same. When the mesh numbers of the layers are the same, the deformation of the permeate-side spacer member due to one layer entering another is unlikely to occur, and the compressive strength of the permeate-side spacer member is improved accordingly. When the permeate-side spacer member has a single-layer structure and when the permeate-side spacer member has a multilayer structure and the mesh numbers of the layers are the same, the mesh number of the permeate-side spacer member is preferably not less than 18. The upper limit of the mesh number is not particularly limited, but may be, for example, not more than 150.

In another embodiment of the present invention, when the permeate-side spacer member is in the form of a mesh, and has a multilayer structure having two or more layers, the mesh numbers of the layers of the permeate-side spacer member may be different. In this case, the mesh number of the permeate-side spacer member is preferably not less than 50. The upper limit of the mesh number is not particularly limited, but may be, for example, not more than 150. When the mesh number of the permeate-side spacer member is not less than 50, the mesh apertures are sufficiently small, and the deformation of the permeate-side spacer member due to one layer entering another is unlikely to occur.

### (First tape and second tape)

The first tape 25 and the second tape 26 are used to prevent penetration of a sealing material. The first tape 25 and the second tape 26 can be formed of a material that is impermeable to the sealing material. Examples of the material include polypropylene, polyimides, polytetrafluoroethylene, glass fibers, and polyesters. The materials for forming the first tape 25 and the second tape 26 may be the same or different. The first tape and the second tape are used during production of the separation membrane element, and can be removed or remain during use of the separation membrane element.

The present invention is not limited to the embodiments, but can be altered by a skilled person in the art within the scope of the claims. The present invention also encompasses, in its technical scope, any embodiment derived by combining technical means disclosed in differing embodiments.

### Examples

### [Example 1]

### (Preparation of separation membrane)

The separation membrane is a composite membrane, and is composed of a separation functional layer (Pebax (registered trademark) polyether block amide copolymer), a porous base material (polyacrylonitrile), and a PET nonwoven fabric serving as a support layer for reinforcement that are stacked one on top of another in this order.

### (Preparation of separation membrane element)

A permeate-side spacer member having dimensions of 119 mm in length and 119 mm in width, a fiber diameter of 263 µm, a thickness of 0.53 mm, and a mesh made of PET (mesh number: 18) was used. Used as the container was a storage container made of a polycarbonate and having external dimensions of 150 mm in length, 150 mm in width, and 85 mm in height, and internal dimensions defined by the guide parts at the four corners of 120 mm in length and 120 mm in width was used. A separation membrane having dimensions of 119 mm in length and 119 mm in width was used. Used as the feed-side spacer member was a polypropylene diamond net (product name NO. 1716 manufactured by SWM) having dimensions of 119 mm in width and 96 mm in length.

### (Preparation of separation membrane element 1)

The separation membrane element 1 was prepared in the procedure below according to the method illustrated in Figs. 4 to 6.
1. First, after the permeate-side spacer member 22 was placed in the container, an adhesive (DENATITE 2204 manufactured by Nagase ChemteX Corporation) was applied to both end parts (in the length direction L) of the permeate-side spacer member 22 (corresponding to 33a in Fig. 4 (b)). Although the first tape 25 is illustrated in Fig. 4, the attachment was omitted in the present Example.
2. The separation membrane 21a was placed such that the separation functional layer serves as the upper surface thereof (Fig. 4(c)). Further, a sealing material A (double-sided tape (Y-4930) manufactured by 3M measuring 10 mm in width and 150 mm in length) serving as the feed-side sealing part 31 was attached to both end parts on the opposite sides (i.e., in the width direction W) from the end parts in which the adhesive (33a) was applied to the permeate-side spacer member 22 (corresponding to 33b in Fig. 5(a)). Then, the feed-side spacer member 23 was placed (Fig. 5b). Although the second tape 26 is illustrated in Figs. 5 (b) and (c), the attachment was omitted in the present Example.
3. After the separation membrane 21b was placed such that the separation functional layer surface serves as the lower surface thereof (Fig. 5 (c)), an adhesive was applied to both end parts of the separation membrane on the opposite sides (i.e., in the length direction L) from the feed-side sealing parts 33b. Next, the permeate-side spacer member 22 was placed (Fig. 6(a)).
4. The above-described operations 1 to 3 for forming the permeate-side spacer member 22, the separation membrane 21, and the feed-side spacer member 23 one on top of another was repeated until the number of membrane leaves reached 20. The membrane leaves and the four guide part corners in the container were sealed with the adhesive.
5. The adhesive was applied to both end parts (i.e., the length direction L) of the surface of the permeate-side spacer member 22 of the top membrane leaf. After the upper lid of the container 40 was placed, an adhesive was applied to a gap between the upper lid and the container (Fig. 6, (b)). Subsequently, seven flanges (10.2 kg) each having a diameter of 12 cm and a thickness of 15 mm were placed on the upper lid at room temperature for 10 hours, and the adhesive was cured by drying. The separation membrane element 1 was thus obtained. The separation membrane element 1 thus obtained had an effective membrane area of 0.2 m².

### [Example 2]

A separation membrane element was obtained in the same manner as in Example 1, except that two sheets of mesh of the permeate-side spacer member were stacked and used.

### [Example 3]

A separation membrane element was obtained in the same manner as in Example 1, except that the mesh of the permeate-side spacer member was made of polypropylene, and had a fiber diameter of 250 µm, a thickness of 0.50 mm, and a mesh number of 25.

### [Example 4]

A separation membrane element was obtained in the same manner as in Example 3, except that two sheets of mesh of the permeate-side spacer member were stacked and used.

### [Example 5]

A separation membrane element was obtained in the same manner as in Example 1, except that the mesh of the permeate-side spacer member had a fiber diameter of 70 µm, a thickness of 0.14 mm, and a mesh number of 50.

### [Example 6]

A separation membrane element was obtained in the same manner as in Example 5, except that two sheets of mesh of the permeate-side spacer member were stacked and used.

### [Example 7]

A separation membrane element was obtained in the same manner as in Example 1, except that the mesh of the permeate-side spacer member had a fiber diameter of 150 µm, a thickness of 0.30 mm, and a mesh number of 50.

### [Example 8]

A separation membrane element was obtained in the same manner as in Example 7, except that two sheets of mesh of the permeate-side spacer member were stacked and used.

### [Example 9]

A separation membrane element was obtained in the same manner as in Example 1, except that the mesh of the permeate-side spacer member had a fiber diameter of 70 µm, a thickness of 0.14 mm, and a mesh number of 80.

### [Example 10]

A separation membrane element was obtained in the same manner as in Example 9, except that two sheets of mesh of the permeate-side spacer member were stacked and used.

### [Example 11]

A separation membrane element was obtained in the same manner as in Example 1, except that the mesh of the permeate-side spacer member had a fiber diameter of 70 µm, a thickness of 0.14 mm, and a mesh number of 100.

### [Example 12]

A separation membrane element was obtained in the same manner as in Example 1, except that a mesh (thickness: 0.21 mm) obtained by sandwiching the mesh (fiber diameter: 70 µm, mesh number: 50) used in Example 5 between the meshes (fiber diameter: 70 µm, mesh number: 100) used in Example 11 was used as the permeate-side spacer member.

### [Example 13]

A separation membrane element was obtained in the same manner as in Example 7, except that a sealing material B (double-sided tape (Y-4920) manufactured by 3M measuring 10 mm in width and 150 mm in length) was used instead of the sealing material A.

### [Comparative Example 1]

A separation membrane element was obtained in the same manner as in Example 1, except that a mesh (thickness: 0.76 mm) obtained by sandwiching the mesh (fiber diameter: 263 nm, mesh number: 18) used in Example 1 between the meshes (fiber diameter: 250 nm, mesh number: 25) used in Example 3 was used as the permeate-side spacer member.

### [Comparative Example 2]

A separation membrane element was obtained in the same manner as in Example 1, except that a mesh (thickness: 0.55 mm) obtained by sandwiching the mesh (fiber diameter: 250 nm, mesh number: 25) used in Example 3 between the meshes (fiber diameter: 70 nm, mesh number: 50) used in Example 5 was used as the permeate-side spacer member.

### [Comparative Example 3]

A separation membrane element was obtained in the same manner as in Comparative Example 2, except that the sealing material B was used instead of the sealing material A.

### [Comparative Example 4]

A separation membrane element was obtained in the same manner as in Example 7, except that a sealing material C (two-component epoxy adhesion (90FL) manufactured by Henkel Ltd.) was used instead of the sealing material A.

### [Measurement method]

### (Determination of peel strength in sealing part)

The average peel strength (hereinafter, also referred to as peel strength) in the feed-side sealing part of each of the separation membrane elements prepared in Examples and Comparative Examples was determined by the procedure indicated below. The procedure indicated below is in compliance with JIS
K 6854-1.
1. From the separation membrane element, the container lid was removed, and a laminated product was taken out.
2. From the laminated product taken out, a piece was cut out so as to include the feed-side sealing parts of the membrane leaves and have dimensions of 100 mm in length and 25 mm in width. A test piece was thus obtained.
3. The average peel strength [N] of the feed-side sealing parts each present between a separation membrane and a feed-side spacer member (peeling section: 40 mm to 100 mm) of the test piece was measured by a T-peel test. The T-peel test was carried out using a test machine ("compact tabletop tester EZ-graph" manufactured by Shimadzu Corporation) under a temperature of 25°C.

### (Compression test)

The amount of compressive deformation of the permeate-side spacer member of each of the separation membrane elements prepared in Examples and Comparative Examples was determined by the procedure below. The procedure below is in compliance with JIS K 7181.
1. From the separation membrane element, the container lid was removed, and a laminated product was taken out.
2. From the laminated product taken out, a piece was cut out so as to include the permeate-side spacer members of the membrane leaves and have dimensions of 80 mm × 80 mm. A test piece was thus obtained.
3. The amount of deformation of the test piece corresponds to the amount of compressive deformation of the permeate-side spacer members under a load of 900 N at a speed of 0.1 mm/min. The compression test was carried out using a test machine ("compact tabletop tester EZ-graph" manufactured by Shimadzu Corporation) under a temperature of 25°C.

### (Gas leakage test)

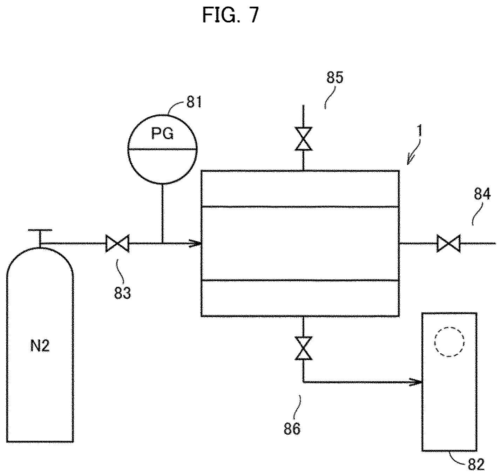

A gas leakage test of each of the separation membrane elements prepared in Examples and Comparative Examples was carried out in the procedure below. Fig. 7 is a schematic view illustrating a test device for the gas leakage test. In Fig. 7, the two respective end parts parallel to the width direction W of the separation membrane element 1 were a feed part 83 communicating with the first feed port 43 ((b) of Fig. 6) and a discharge part 84 communicating with the first discharge port 44 ((b) of Fig. 6). The two respective end parts parallel to the length direction L of the separation membrane element 1 were a feed part 85 communicating with the feed and discharge port 45 ((b) of Fig. 6) and a discharge part 86 communicating with the second discharge port 46 ((b) of Fig. 6).
1. With use of the device illustrated in Fig. 7, a pressure of 200 kPG (where G indicates a gauge pressure) was applied to the feed part 83 of the separation membrane element by feeding an N₂ gas at room temperature (20°C) into the separation membrane element. The pressure was checked with a pressure gauge, and the valves of the discharge parts 84 and 86 were closed.
2. The valve of the feed part 85 was closed, the valve of the discharge part 86 was opened, and a permeate gas flow rate was measured with a high-precision membrane flowmeter ("VP-U series" manufactured by HORIBA, Ltd.) and evaluated according to the following criteria:
   A: The N₂ permeance indicated by the membrane flowmeter is not more than 40 GPU.
   B: The N₂ permeance indicated by the membrane flowmeter is more than 40 GPU.

The results of the tests carried out on the separation membrane elements of Examples and Comparative Examples are listed in Table 1.

**[Table 1]**

| | Mesh number | Fiber diameter (µm) | Number of sheets | Thickness (mm) | Material | Amount of compressive deformation (mm) | Sealing material | Average peel strength (N) | Gas leakage test |
|---|---|---|---|---|---|---|---|---|---|
| Example 1 | 18 | 263 | 1 | 0.53 | PET | 0.25 | Sealing material A | 1.2 | A |
| Example 2 | 18 | 263 | 2 | 1.05 | PET | 0.39 | Sealing material A | 1.2 | A |
| Example 3 | 25 | 250 | 1 | 0.50 | PP | 0.19 | Sealing material A | 1.2 | A |
| Example 4 | 25 | 250 | 2 | 1.00 | PP | 0.30 | Sealing material A | 1.2 | A |
| Example 5 | 50 | 70 | 1 | 0.14 | PET | 0.12 | Sealing material A | 1.2 | A |
| Example 6 | 50 | 70 | 2 | 0.28 | PET | 0.19 | Sealing material A | 1.2 | A |
| Example 7 | 50 | 150 | 1 | 0.30 | PP | 0.16 | Sealing material A | 1.2 | A |
| Example 8 | 50 | 150 | 2 | 0.60 | PP | 0.25 | Sealing material A | 1.2 | A |
| Example 9 | 80 | 70 | 1 | 0.14 | PET | 0.11 | Sealing material A | 1.2 | A |
| Example 10 | 80 | 70 | 4 | 0.56 | PET | 0.24 | Sealing material A | 1.2 | A |
| Example 11 | 100 | 70 | 1 | 0.14 | PET | 0.12 | Sealing material A | 1.2 | A |
| Example 12 | 100/50/100 | 70/70/70 | 3 | 0.21 | PET | 0.15 | Sealing material A | 1.2 | A |
| Example 13 | 50 | 150 | 1 | 0.30 | PP | 0.16 | Sealing material B | 3.5 | A |
| Comparative Example 1 | 25/18/25 | 250/263/250 | 3 | 0.76 | PP/PET | 0.68 | Sealing material A | 1.2 | B |
| Comparative Example 2 | 50/25/50 | 70/250/70 | 3 | 0.55 | PP | 0.51 | Sealing material A | 1.2 | B |
| Comparative Example 3 | 50/25/50 | 70/250/70 | 3 | 0.55 | PP | 0.51 | Sealing material B | 3.5 | B |
| Comparative Example 4 | 50 | 150 | 1 | 0.30 | PP | 0.16 | Sealing material C | 0.6 | B |

### [Results]

Table 1 shows that all the separation membrane elements of Examples 1 to 13, which have amounts of compressive deformation of the permeate-side spacer members of not more than 0.40 mm and peel strengths of the feed-side sealing parts of not less than 1.0 N, exhibit excellent gas tightness, and the feed-side sealing parts thereof have not peeled off. It has also been shown from Example 13 that the sealing part does not peel off even if the sealing material is changed, provided that the amount of compressive deformation is not more than 0.40 mm and the peel strength is sufficient.

In contrast, it has been shown that for any of Comparative Examples 1 to 3, where the amount of compressive deformation is more than 0.40 mm, even if the peel strength of the feed-side sealing part is high, the gas tightness is poor, and the feed-side sealing part peeled off. It has also been shown from Comparative Example 4 that even when the amount of compressive deformation is not more than 0.40 mm, if the peel strength is less than 1.0 N, the feed-side sealing part peels off.

### Industrial Applicability

An aspect of the present invention can be widely used in the process of separating an acid gas, such as CO₂, from a gas mixture containing at least an acid gas and water vapor, such as syngas synthesized in a large-scale plant producing hydrogen, urea, or the like, combustion exhaust gas discharged from a power plant, a waste treatment plant, a cement plant, or the like, a natural gas, or other exhaust gases.

### Reference Signs List

1: Separation membrane element, 10: Laminate, 11: First end part, 12: Second end part, 20: Membrane laminate part, 21: Separation membrane, 21a: First separation membrane (separation membrane), 21b: Second separation membrane (separation membrane), 22: Permeate-side spacer member, 23: Feed-side spacer member, 25: First tape, 26: Second tape, 31: Feed-side sealing part, 32: Permeate-side sealing part, 33a: Sealing material, 33b: Sealing material, 40: Container, 41: Guide part, 43: First feed port, 44: First discharge port, 45: Feed and discharge port, 46: Second discharge port, 47: Upper surface part, 48: Lower surface part, 49: Side wall part, 51: Adhesion part, 52: Separation functional layer, 53: Porous base material, 81: Pressure gauge, 82: Flowmeter, 83: Feed part, 84: Discharge part, 85: Feed part, 86: Discharge part

## Claims

1. A plate-and-frame-type separation membrane element comprising:
a container; and a separation membrane having a region disposed in a flat-membrane form in the container, wherein:
the separation membrane has a separation functional layer that selectively separates a specific fluid component contained in a raw material fluid;
the container houses a laminate that at least has two permeate-side spacer members, and the separation membrane and a feed-side spacer member which are disposed between the two permeate-side spacer members, wherein a permeate fluid, which has permeated through the separation membrane, flows through the two permeate-side spacer members, and the raw material fluid flows through the feed-side spacer member;
the separation membrane element has a feed-side sealing part between the feed-side spacer member and the separation membrane;
the permeate-side spacer member has an amount of compressive deformation, as measured by JIS K 7181, of not more than 0.40 mm; and
the sealing part has a peel strength, as measured by JIS K 6854, of not less than 1.0 N.

2. The plate-and-frame-type separation membrane element according to claim 1, wherein
the permeate-side spacer members have a mesh number of not less than 18, and
when the permeate-side spacer members each have a multilayer structure which has not less than two layers, the not less than two layers have the same mesh number.

3. The plate-and-frame-type separation membrane element according to claim 1, wherein
the permeate-side spacer members have a mesh number of not less than 50.

4. The plate-and-frame-type separation membrane element according to any one of claims 1 to 3, wherein
the separation membrane has a thickness from 10 µm to 600 µm

5. The plate-and-frame-type separation membrane element according to any one of claims 1 to 3, wherein
the raw material fluid is a gas.

6. The plate-and-frame-type separation membrane element according to any one of claims 1 to 3, wherein
the specific fluid component is an acid gas.

7. A separation apparatus comprising:
the plate-and-frame-type separation membrane element according to any one of claims 1 to 3; a first feed part and a first discharge part that are in communication with the feed-side spacer member; and a second discharge part that is in communication with the permeate-side spacer members.
